# EUROPÄISCHE PATENTSCHRIFT

(11) **EP 3 066 930 B1**
(45) Veröffentlichungstag und Bekanntmachung des Hinweises auf die Patenterteilung: **01.08.2018**
(21) Anmeldenummer: 16159767.9
(22) Anmeldetag: 11.03.2016
(51) Int. Cl.: A21C 15/04, B26D 1/36, B26D 7/06, B26D 7/26, B26D 9/00

(54) **EINRICHTUNG ZUM TEILEN VON GEBACKENEN, BANDFÖRMIGEN BACKWAREN**
DEVICE FOR DIVIDING UP BAKED, BAKERY PRODUCTS IN THE FORM OF A STRIP
DISPOSITIF DESTINE A COUPER DES PRODUITS CUITS EN FORME DE BANDES

(30) Priorität: 11.03.2015 DE 102015204413
(43) Veröffentlichungstag der Anmeldung: 14.09.2016
(73) Patentinhaber: Bühler, Leo, 8820 Wädenswil (CH)
(72) Erfinder: Bühler, Leo, 8820 Wädenswil (CH)
(74) Vertreter: Patentbüro Paul Rosenich AG

(56) Entgegenhaltungen:
- WO-A1-2014/196635
- DE-A1- 1 532 949
- US-A1- 2014 260 857

## Beschreibung

Die Erfindung betrifft eine Einrichtung zum Teilen von gebackenen, bandförmigen Backwaren, insbesondere von Knäckebrot, nach dem Oberbegriff des Anspruchs 1. Weiterhin umfasst die Erfindung eine Schneideinrichtung gemäss Oberbegriff des Anspruchs 10.

Lagerfähige Backwaren, wie zum Beispiel Knäckebrot werden kurz und sehr heiss gebacken und anschliessend getrocknet. Es enthält dann zumeist einen Wassergehalt von weniger als 10 Gew.-%, ist knusprig und bei trockener Lagerung sehr lange haltbar.

Der Trocknungsprozess wird durch die Gestaltung der Oberfläche von Knäckebrot in Form eines Muldenmusters mit Vertiefungen noch verstärkt. Bei Kaltknäckebrot wird der Teig durch Einschlagen von Kaltluft gelockert und dabei bis auf ca. 0°C gekühlt.

Dieser Knäckebrotteig wird in einem kontinuierlichen Prozess hergestellt, wobei der Teig als durchgehendes, dünnes Band nach dem Backen mit grosser Breite auf einer Fördereinrichtung mit konstanter Geschwindigkeit aus dem Ofen direkt in eine Schneideinrichtung fährt. In der Schneideinrichtung wird der gebackene Knäckebrotteig üblicherweise in einem ersten Schritt quer zur Vorschubrichtung in Streifen geschnitten und anschliessend werden diese Streifen in einem zweiten Schritt mittels Kreissägeblättern längs zur Vorschubrichtung in Scheiben gesägt, deren Breite geringer als die Breite der Streifen ist.

Eine entsprechende Einrichtung ist zum Beispiel aus der DE2621836C3 bekannt. Diese beinhaltet eine Längsschneidevorrichtung, die aus mehreren, parallel nebeneinander angeordneten Kreismessern besteht, und eine guillotinenartige Querschneideinrichtung, die aus einem Obermesser und einem Untermesser besteht. Ober- und Untermesser sind mit Antriebselementen und Lenkern verbunden, so dass sich Ober- und Untermesser zum Schneiden aufeinander zu bewegen können resp. für den Vorschub des Knäckebrotbandes voneinander entfernen können. Während eines Schnittes stösst das Knäckebrotband gegen Ober- und Untermesser und wird dadurch kurzzeitig gestoppt, bis sich die Messer wieder ausreichend voneinander entfernt haben.

Ober- und Untermesser sind zudem in Vorschubrichtung des Knäckebrotbandes hin und her bewegbar.

Nachteilig an dieser bekannten Lösung ist, dass sich durch das guillotinenartige Schneiden in der Querschneideinrichtung das Knäckebrotband auch seitwärts verschieben kann, was unerwünschte schräge Schnitte an den zugeschnittenen Knäckebrotscheiben zur Folge hat. Die lineare Bewegung und die Masse des Messeraufbaus begrenzen zudem die Arbeitsgeschwindigkeit der bekannten Vorrichtung. Die Schneidbewegung von Ober- und Untermesser ist ruck- und schlagartig, was einerseits zu ausgerissenen Schneidkanten der Knäckebrotstreifen führen kann und andererseits eine hohe mechanische Belastung der Querschneideinrichtung durch Schläge, Vibrationen und Schwingungen bewirkt. Messer und Gestellteile müssen daher massiv ausgeführt sein. Die Anzahl der ausführbaren Schnitte pro Zeiteinheit ist mechanisch bedingt begrenzt.

Die in der Längsschneidevorrichtung zugeschnittenen Knäckebrotscheiben werden nachfolgend einer Verpackungsmaschine zugeführt.

Die DE 1 532 949 A1, die die Basis für die Oberbegriffe der Ansprüche 1 und 9 bildet, zeigt ein Verfahren und eine Einrichtung zur Herstellung von pastetenartigen Nahrungsmitteln. Dabei wird eine Teigware von zwei Walzen geformt und auf einen Förderer positioniert. Die Teigplatte wird mit den Schneidrollen der Länge nach in Streifen geschnitten. Eine Faltvorrichtung faltet die Teigplatte und die zusammenfalteten Teigstreifen werden anschliessend zwischen zwei Walzen geschnitten. Dabei weist die drehbare Walze eine Vielzahl von radial angeordneten Messer und die Walze radial angeordnete Ambossabschnitte mit Axialrinnen auf. Der Schneidvorgang erfolgt mithilfe der radial angeordneten Messer, welche am hochstehenden Ambossabschnitte der Walze anschlagen.

Eine weitere Einrichtung zum Teilen einer Platte bzw. eines Streifens aus einer trockenen, spröden Backware, insbesondere Knäckebrot, ist in der DE3525782A1 offenbart. Hierbei wird das Knäckebrotband mittels einer Bandsäge, die eine kontinuierliche Bewegung ausführt, in Knäckebrotscheiben gesägt. Das Sägeband ist mit dem sägenden Trum senkrecht zu dem zu sägenden Knäckebrotband angeordnet. Dadurch, dass das Sägeband wesentlich dünner als ein Kreissägeblatt sei, soll der Schnittabfall, die Belastung durch Schnittstaub und die Bruchgefahr wesentlich geringer als bei Kreissägeblättern sein. Bevorzugt sollen auch mindestens zwei Bandsägen parallel zueinander angeordnet sein.

Eine Bandsäge erfordert jedoch einen hohen Platzbedarf und kann nicht mit sehr hoher Geschwindigkeit betrieben werden. Zudem kann das Sägeband infolge Instabilität seitlich wandern oder durch Körner oder andere harte Bestandteile in der gebackenen Backware weggedrückt werden.

Ebenfalls bekannt sind Einrichtungen zum Schneiden von ungebackenen Backwaren, wie beispielsweise die Einrichtung aus der DE1532949.

Aufgabe der vorliegenden Erfindung ist es somit, eine Einrichtung zum Teilen von gebackenen, bandförmigen Backwaren, insbesondere von Knäckebrot, zu schaffen, die die Nachteile des Standes der Technik meidet und einen harmonischen, kontinuierlichen Schneidvorgang in der Querschneideinrichtung ermöglicht.

Die Aufgabe wird durch die Merkmale des unabhängigen Anspruchs 1 gelöst. Vorteilhafte Weiterbildungen sind in den Figuren und in den abhängigen Patentansprüchen dargelegt.

Eine solche Einrichtung umfasst eine Schneideinrichtung, der eine Fördereinrichtung zur Führung und Vorschub einer bandförmigen, trockenen und spröden Backware, insbesondere Knäckebrot, von einer Backeinrichtung zur Schneideinrichtung zugeordnet ist, wobei die Schneideinrichtung einen Querschneider zum Schneiden der bandförmigen Backware in Streifen quer zur Vorschubrichtung umfasst. Erfindungsgemäss umfasst der Querschneider mindestens ein, der bandförmigen Backware zugewandtes, rotierendes Messer mit einer Klinge, dem gegenüberliegend ein band- oder plattenförmiger Gegenhalter (flache Ebene) als eine Gegenstütze zugeordnet ist.

Die als ein band- oder plattenförmiger Gegenhalter (flache Ebene) ausgebildete Gegenstütze gewährleistet eine ausreichende Abstützung sowie Führung der gebackenen Backware während dem Schneidvorgang. Wesentlich ist dabei, dass die Eintrittsstelle einer Klinge in den Teig zwischen dem Messer und der Gegenstütze befindlich ist. Somit lassen sich in wiederholbarer Weise mit einem hohen Taktzeiten (Schneidzyklen) gebackene, spröde Backwaren teilen, wobei die Seitenkanten der Scheiben die gewünschte Ausgestaltung aufweisen.

Eine solche Lösung ist analog auch bei einem folgenden Längsschneider der Streifen in Scheiben anwendbar.

Im Vergleich zum Stand der Technik sind neben einem harmonischen, kontinuierlichen Schneidvorgang auch kürzere Taktzeiten und damit eine höhere Produktivität der Einrichtung möglich.

Vorzugsweise ist die Drehachse des Messers parallel zur Vorschubrichtung der Backware gelegen. Weiterhin bevorzugt ist es in Vorschubrichtung sowie quer zur Vorschubrichtung bewegbar angeordnet. Beide Massnahmen ermöglichen einen Schnitt der Streifen mit gerader Kante sowie eine Anpassung an unterschiedlich dicke Backwaren, insbesondere durch eine Anpassung der Messerzustellung.

Der plattenförmige Gegenhalter als Gegenstütze ist vorzugsweise auch in Bezug auf das Messer beziehungsweise relativ zu diesem verstellbar ausgebildet. Der Spalt zwischen Klinge und Gegenhalter ist dadurch mechanisch einfach einstellbar. Vorteilhaft wird die Grösse dieses Spalts so gering wie möglich gehalten, wobei diese Grösse unabhängig von der Dicke der gebackenen Backware ist.

Um unterschiedlich dicke gebackene Backwaren in der gewünschten Weise zu teilen, kann der Klingenwinkel der Messer relativ zum band- oder plattenförmigen Gegenhalter eingestellt werden.

Hierbei kann der plattenförmige Gegenhalter mittels einer Vorrichtung, wie beispielsweise eines Exzenters, relativ zur Klinge respektive zum Messer verstellbar sein. Vorteilhaft ist das Messer mit mehreren, vorzugsweise drei, Klingen versehen, die auf dem Umfang des Messers weiterhin bevorzugt gleichmässig voneinander beabstandet angeordnet sind.

Durch Variation der Rotationsgeschwindigkeit des Messers kann die Taktzeit und/oder die Länge eines Streifens der gebackenen Backware beziehungsweise des Knäckebrotstreifens variiert werden.

Je mehr Klingen am Messer angebaut sind, desto niedriger kann die Drehzahl des Messers angesetzt werden, was den Verschleiss der Klingen verringert.

Weiterhin ist eine Klingeneinstellvorrichtung vorgesehen, mittels der ein Anstellwinkel der Klingen in Abhängigkeit von der Bandstärke beziehungsweise der Dicke der Backware einstellbar ist, um einen optimalen Eindringwinkel der Klinge und somit qualitativ hochwertiger Zuschnitt zu erhalten. Hierbei bestimmt die Dicke der Backware, namentlich die Höhe der Mittelachse bzw. der Mittelebene des Backwarenbandes sowie die Geschwindigkeit der Relativbewegung des Backwarenbandes den Eindringwinkel, der zumindest auf der Höhe der Mittelachse beziehungsweise der Mittelebene bevorzugt im Wesentlichen 90° betragen soll. Er ist also bevorzugt senkrecht zur Oberseite des Knäckebrots. Ist dies nicht gegeben, wird beim Eindringen ein zu starker Druck auf das Knäckebrot ausgeübt und es entstehen an der Kante des zugeschnittenen Streifens unschöne Ausbrüche. Vorzugsweise wird die Klinge beim Eindringen in die gebackene Backware über deren gesamte Höhe beziehungsweise Dicke derart nachgeführt, dass diese jeweils immer im Wesentlichen 90° zu der Auflagefläche der Backware ausgerichtet ist.

Da bei Knäckebrot unterschiedliche Scheibendicken marktüblich sind, kann mit der erfindungsgemässen Einrichtung bei allen Scheibendicken eine gute Schnittqualität mittels einfacher Verstellung erreicht werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine erfindungsgemässe Einrichtung in Draufsicht, schematisiert,
- Fig. 2: ein erfindungsgemässes Messer der Einrichtung nach Fig. 1,
- Fig. 3: eine schematische Skizze einer in die gebackene Backware eindringende Klinge,
- Fig. 4: das Messer nach Fig. 2 mit einer Gegenplatte als Gegenstütze,
- Fig. 5: eine Klingenverstelleinrichtung des Messers nach Fig. 2, schematisiert.

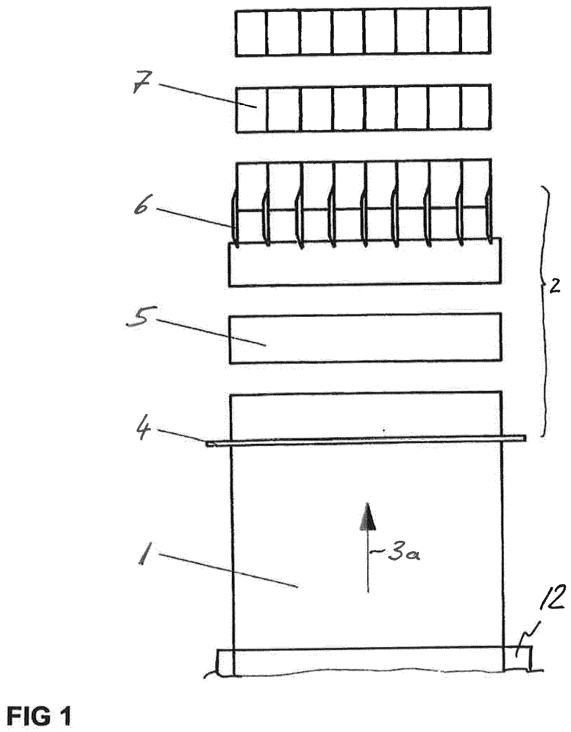

Die Fig. 1 zeigt die erfindungsgemässe Einrichtung zum Teilen von gebackenen, bandförmigen Backwaren, insbesondere von trockenen und spröden Backwaren wie Knäckebrot. Diese ist zugleich als Durchlaufschema dargestellt. Das in einem kontinuierlichen Prozess hergestellte Knäckebrot 1 wird in einem kontinuierlichen Prozess gebacken, wobei die Backware im beschriebenen Beispiel als durchgehendes Band beliebiger Länge nach dem Backen in einer definierten Breite von zum Beispiel ca. 1,5 m und einer definierten Dicke von zum Beispiel 1,5 mm bis 7 mm auf einer Fördereinrichtung 3 in Vorschubrichtung 3a mit konstanter Geschwindigkeit aus einem Backofen als Backeinrichtung 12 direkt in eine Schneideinrichtung 2 fährt. In der Schneideinrichtung 2 wird das Knäckebrot 1 in einem ersten Schritt in einem Querschneider 4 quer zur Vorschubrichtung in Streifen 5 einer definierten Breite von zum Beispiel ca. 110 mm geschnitten und anschliessend werden diese Streifen in einem zweiten Schritt in einem Längsschneider 6, der zum Beispiel mehrere, zueinander beabstandete und fest eingestellte Kreissägeblätter aufweist längs zur Vorschubrichtung in Scheiben 7 mit einer definierten Breite von zum Beispiel ca. 65 mm gesägt. Die Breite der Scheiben 7 soll gleich bleiben, was auch für den weiteren Transport, resp. die Führung der Scheiben 7 wichtig ist.

Die im Längsschneider 6 zugeschnittenen Scheiben 7 werden nachfolgend einer, wiederum nicht dargestellten Verpackungsmaschine zugeführt.

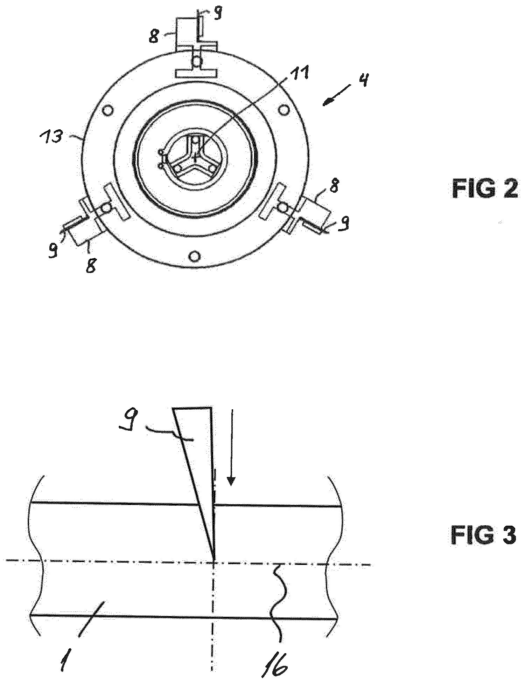

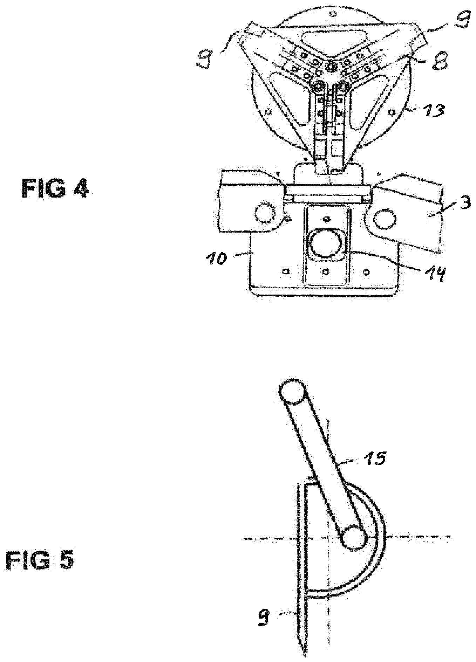

Die Fig. 2 zeigt Messer 8 des Querschneiders 4 in einem Messerhalter 13 und die Fig. 4 ein Messer 8 mit einem Gegenhalter 10.

Bei entsprechenden räumlichen Gegebenheiten und Produktivitätsanforderungen könnten auch zwei Querschneider 4 vorgesehen sein, die rechts und links vom Knäckebrot 1 und in Vorschubrichtung beabstandet voneinander angeordnet sind. Sie können gleich- oder gegenläufig sein und pro Takt einen zusätzlichen Querschnitt ausführen.

Der Querschneider 4 ist der Backware zugewandt, im Beispiel oberhalb des Knäckebrots 1 angeordnet. Die Drehachse 11 des Messers 8 ist parallel zur Vorschubrichtung 3a des Knäckebrots 1 gelegen. Messerhalter 13 und Messer 8 sind zudem in Vorschubrichtung 3a sowie quer zur Vorschubrichtung bewegbar angeordnet. Somit kann das Knäckebrotband in Streifen 5 geschnitten werden und nach jedem Schnitt fährt der Querschneider 4 entweder in seine Ausgangsposition zurück oder in entgegengesetzter Richtung zum vorangegangenen Schnitt, um einen weiteren Schnitt auszuführen.

Das Knäckebrot 1 läuft kontinuierlich unter dem Messer 8 durch, wobei das Messer 8 in dieselbe Richtung, d. h. in Vorschubrichtung 3a dreht. Beim Schneiden muss das Messer 8 die Vorschubgeschwindigkeit des Knäckebrots 1 übernehmen, um das Knäckebrot 1 weder zu ziehen noch zu stoppen.

Das Messer 8 rotiert im Betriebszustand um die Drehachse 11, wobei der Messerhalter 13 im vorliegenden Beispiel drei Messer 8 mit jeweils einer Klinge 9 aufweist, die auf dem Umfang des Messerhalters 13 bevorzugt gleichmässig voneinander in radialer Richtung beabstandet angeordnet sind. Die Drehzahl der Messer 8 ist variierbar.

Nach dem Schnitt mittels einer Klinge 9 greift eine zweite Klinge 9 für den nächsten Schnitt in das Knäckebrot 1 ein und anschliessend die dritte Klinge 9. Danach greift erneut die erste Klinge 9 ein. Die Drehgeschwindigkeit der Messer 8 zwischen jedem Schneidvorgang definiert die Länge des Knäckebrotstreifens, da das Knäckebrot 1 relativ zum Messer 8 fährt.

Der Messerhalter 13 ist weiterhin mit einer Klingeneinstellvorrichtung versehen, mittels der ein Anstellwinkel beziehungsweise ein Eindringwinkel der Klingen 9 einstellbar ist. Dieser Eindringwinkel wird in Abhängigkeit von der Bandstärke beziehungsweise der Dicke des Knäckebrots 1 und/oder aufgrund der Geschwindigkeit der Relativbewegung des Knäckebrots 1 gewählt. Die mit dem entsprechenden Anstellwinkel ausgerichteten Klingen 9 dringen trotz der Relativbewegung des Knäckebrots 1 immer optimal ein. Je dünner das Knäckebrot 1 ist, desto später muss bei gleicher Rotationsgeschwindigkeit die Klinge 9 für eine optimale Teilung in dieses eindringen.

Hierbei können die Messer 8, resp. die Klingen 9, um die Drehachse 11 herum mittels eines Hebels 15, zum Beispiel exzentrisch verstellt werden (Fig. 5).

Somit kann Knäckebrot 1 mit unterschiedlicher Dicke in hoher Qualität geschnitten werden. Der Eindringwinkel der Klinge 9 in das Knäckebrot beträgt im Beispiel und bezogen auf die Mittelachse/Mittelebene 16 des Knäckebrots 1 im Wesentlichen 90° (Fig. 3).

Ein plattenförmiger Gegenhalter 10 ist als Gegenstütze vorgesehen, wie dies in der Fig. 4 gezeigt ist. Die Eintrittsstelle jeder Klinge 9 in das gebackene Knäckebrot 1 muss direkt zwischen dem Messer 8 und dem Gegenhalter 10 befindlich sein. Die Auflagefläche unter dem Knäckebrot 1 respektive zwischen dem Messer 8 und dem Gegenhalter 10 sollte sauber sein, um ein Brechen des Knäckebrots 1 oder einen fehlerhaften Schnitt zu vermeiden. Ein solcher Gegenhalter 10 ist in Bezug auf das Messer 8 verstellbar, um den Spalt zwischen der Klinge 9 und dem Gegenhalter 10 einstellen zu können. Diese Verstellung ist zum Beispiel mittels eines Exzenters 14 in der Gegenhalteranordnung ausführbar.

Mittels des erfindungsgemässen Querschneiders 4 ist eine harmonische Schnittbewegung, ohne Schläge oder Vibrationen auf das Maschinengestell ausführbar.

Infolge der möglichen Drehzahlvariierung der Messer 8 kann die Einrichtung auf die Arbeitsgeschwindigkeit der Backeinrichtung 12 synchronisiert werden. Im Vergleich zu einem guillotinenartigen Messer kann der Energiebedarf des Antriebs bei gleicher Schnittanzahl reduziert werden.

Die Einrichtung ist auch für andere, vergleichbare gebackene Backwaren verwendbar.

### Bezugszeichenliste

1 Knäckebrot
2 Schneideinrichtung
3 Fördereinrichtung
3a Vorschubrichtung
4 Querschneider
5 Streifen
6 Längsschneider
7 Scheiben
8 Messer
9 Klinge
10 Gegenhalter
11 Drehachse
12 Backeinrichtung
13 Messerhalter
14 Exzenter
15 Hebel
16 Mittelebene von 1

## Patentansprüche

1. Einrichtung zum Teilen von gebackenen, bandförmigen Backwaren, insbesondere Knäckebrot (1), mittels einer Schneideinrichtung (2), der eine Fördereinrichtung (3) zur Führung und Vorschub der bandförmigen Backware von einer Backeinrichtung (12) zur Schneideinrichtung (2) zugeordnet ist, wobei die Schneideinrichtung (2) einen Querschneider (4) zum Schneiden der bandförmigen Backware in Streifen (5) quer zur Vorschubrichtung (3a) umfasst, wobei der Querschneider (4) mindestens ein, der bandförmigen Backware zugewandtes, rotierendes Messer (8) mit einer Klinge (9) aufweist, dem gegenüberliegend ein band- oder plattenförmiger Gegenhalter (10) als eine Gegenstütze zugeordnet ist **dadurch gekennzeichnet, dass** eine Klingeneinstellvorrichtung vorgesehen ist, mittels der ein Anstellwinkel der Klinge (9) einstellbar ist..

2. Einrichtung nach Anspruch 1, **dadurch gekennzeichnet, dass** die Drehachse (11) des Messers (8) parallel zur Vorschubrichtung (3a) gelegen ist.

3. Einrichtung nach Anspruch 1 oder 2, **dadurch gekennzeichnet, dass** das Messer (8) in Vorschubrichtung sowie quer zur Vorschubrichtung (3a) bewegbar angeordnet ist.

4. Einrichtung nach einem der Ansprüche 1 bis 3, **dadurch gekennzeichnet, dass** das Messer (8) mit mehreren, vorzugsweise drei Klingen (9) versehen ist, die auf dem Umfang eines Messerhalters (13) bevorzugt gleichmässig voneinander beabstandet angeordnet sind.

5. Einrichtung nach einem der Ansprüche 1 bis 4, **dadurch gekennzeichnet, dass** ein Eindringwinkel der Klinge (9) in die Backware im Wesentlichen 90° beträgt.

6. Einrichtung nach einem der Ansprüche 1 bis 5, **dadurch gekennzeichnet, dass** die Gegenstütze (10, 12) in Bezug auf das Messer (8) verstellbar ist.

7. Einrichtung nach Anspruch 6, **dadurch gekennzeichnet, dass** die Gegenstütze (10, 12) mittels eines Exzenters (14) relativ zur Klinge (9) verstellbar ist.

8. Einrichtung nach einem der Ansprüche 1 bis 7, **dadurch gekennzeichnet, dass** die Drehzahl des Messers (8) variierbar ist.

9. Schneideinrichtung für gebackene, bandförmige Backwaren, insbesondere Knäckebrot (1), geeignet zum Schneiden der bandförmigen Backware in Streifen (5) quer zu einer Vorschubrichtung mittels eines Querschneiders (4), wobei der Querschneider (4) mindestens ein, der bandförmigen Backware zugewandtes, rotierendes Messer (8) mit einer Klinge (9) aufweist, dem gegenüberliegend ein band- oder plattenförmiger Gegenhalter (10) als eine Gegenstütze zugeordnet ist, **dadurch gekennzeichnet, dass** eine Klingeneinstellvorrichtung vorgesehen ist, mittels der ein Anstellwinkel der Klinge (9) einstellbar ist.

## Claims

1. Device for cutting ribbon-shaped baked goods, in particular, crispbread (1), by means of a cutting device (2), which a conveyor (3) is assigned to in order to guide and feed the ribbon-shaped baked goods from a baking facility (12) to the cutting device (2), wherein the cutting device (2) comprises a cross cutter (4) to cut the ribbon-shaped baked goods into strips (5) perpendicular to the feed direction (3a), wherein the cross cutter has at least one rotating knife (8) with a blade (9) facing the ribbon-shaped baked goods (4), across from which a ribbon- or plate-shaped counterholder (10) is arranged as a counter support, **characterized in that** a blade-adjustment device is provided, by means of which an angle of attack of the blade (9) is adjustable.

2. Device according to Claim 1, **characterized in that** the rotational axis (11) of the knife (8) is located parallel to the feed direction (3a).

3. Device according to Claim 1 or 2, **characterized in that** the knife (8) is moveably arranged in the feed direction as well as perpendicular to the feed direction (3a).

4. Device according to one of the Claims 1 to 3, **characterized in that** the knife (8) is provided with a plurality of blades (9), preferably three, that are arranged across the surface of a knife holder (13), preferably evenly distanced away from each other.

5. Device according to one of the Claims 1 to 4, **characterized in that** a penetration angle of the blade (9) into the baked goods is primarily 90°.

6. Device according to one of the Claims 1 to 5, **characterized in that** the counter support (10, 12) can be adjusted with relation to the knife (8).

7. Device according to Claim 6, **characterized in that** the counter support (10, 12) can be adjusted by means of an eccentric (14) relative to the blade (9).

8. Device according to one of the Claims 1 to 7, **characterized in that** the rotational speed of the knife (8) is variable.

9. Cutting device for ribbon-shaped baked goods, in particular, crispbread (1), suitable for cutting ribbon-shaped baked goods into strips (5) perpendicular to a feed direction by means of a cross cutter (4), wherein the cross cutter (4) has at least one rotating knife (8) with a blade (9) facing the ribbon-shaped baked goods, across from which a ribbon- or plate-shaped counterholder (10) is arranged as a counter support, **characterized in that** a blade-adjustment device is provided, by means of which an angle of attack of the blade (9) is adjustable.

## Revendications

1. Dispositif destiné à séparer des produits de boulangerie cuits, en forme de bande, notamment du pain croquant (ou pain suédois) (1), au moyen d'un système de découpe (2), auquel est attribué un système de transport (3) pour le guidage et l'avance du produit boulanger en forme de bande d'une installation de cuisson (12) à un système de découpe (2), le système de découpe (2) comprenant un découpeur transversal (4) pour couper le produit boulanger en forme de bande en bandes (5) transversalement au sens d'avance (3a), le découpeur transversal (4) comportant au moins un couteau rotatif (8) tourné vers le produit boulanger en bande avec une lame (9), un contre-support en forme de bande ou de plaque (10) opposé à celui-ci étant attribué en tant que contre-appui, **caractérisé en ce qu'**un dispositif de réglage de lame est prévu au moyen duquel un angle d'incidence de la lame (9) peut être réglé.

2. Dispositif selon la revendication 1, **caractérisé en ce que** l'axe de rotation (11) du couteau (8) est posé parallèlement au sens d'avance (3a).

3. Dispositif selon la revendication 1 ou 2, **caractérisé en ce que** le couteau (8) est disposé pouvant être mobile dans le sens de l'avance ainsi que transversalement par rapport au sens d'avance (3a).

4. Dispositif selon l'une quelconque des revendications 1 à 3, **caractérisé en ce que** le couteau (8) est doté de plusieurs, de préférence de trois lames (9), qui sont disposées sur la périphérie d'un porte-couteaux (13), de préférence à distance régulière les unes des autres.

5. Dispositif selon l'une quelconque des revendications 1 à 4, **caractérisé en ce qu'**un angle de pénétration de la lame (9) dans le produit boulanger est pour l'essentiel de 90°.

6. Dispositif selon l'une quelconque des revendications 1 à 5, **caractérisé en ce que** le contre-appui (10, 12) peut être réglé en référence au couteau (8).

7. Dispositif selon la revendication 6, **caractérisé en ce que** le contre-appui (10, 12) peut être réglé par rapport à la lame (9) au moyen d'un excentrique (14).

8. Dispositif selon l'une quelconque des revendications 1 à 7, **caractérisé en ce que** le nombre de tours du couteau (8) peut être modifié.

9. Dispositif de découpe pour des produits boulangers cuits, en forme de bande, notamment du pain croquant (ou pain suédois) (1), adapté pour découper le produit boulanger en forme de bande en bandes (5) parallèlement à un système d'avance au moyen d'un découpeur transversal (4), le découpeur transversal (4) comportant au moins un couteau rotatif (8) tourné vers le produit boulanger en forme de bande avec une lame (9) un contre-support en forme de bande ou de plaque (10) opposé à celui-ci étant attribué en tant que contre-appui **caractérisé en ce qu'**un dispositif de réglage de lame est prévu au moyen duquel un angle d'incidence de la lame (9) peut être réglé.
